# EUROPEAN PATENT SPECIFICATION

(11) **EP 0 508 017 B1**
(45) Date of publication and mention of the grant of the patent: **10.01.1996**
(21) Application number: 91309091.6
(22) Date of filing: 03.10.1991
(51) Int. Cl.: F16J 15/08, F16J 15/12

(54) **Metal laminate gasket with graphite sheet**
Flachdichtung aus Metalllaminat mit einer Graphitschicht
Joint d'étanchéité en métal laminé avec une couche de graphite

(30) Priority: 25.03.1991 US 673892
(43) Date of publication of application: 14.10.1992
(73) Proprietor: ISHIKAWA GASKET CO. LTD., Tokyo (JP)
(72) Inventor: Udagawa, Tsunekazu, Ichikawa-shi (JP); Susumu, Inamura, Endogawa-ku, Tokyo (JP)
(74) Representative: Goddard, David John

(56) References cited:
- EP-A- 0 328 675
- US-A- 4 807 892
- US-A- 4 834 399

## Description

### Background of the Invention and Related Art Statement

The present invention relates to a steel laminate gasket of a very thin type with a graphite sheet.

A conventional steel laminate gasket is constructed by laminating several plates, and is provided with a complicated sealing portion around a hole to be sealed. Consequently, it is difficult to manufacture a steel laminate gasket with light weight. Also, productivity of a steel laminate gasket is poor. As a result, a steel laminate gasket is expensive than other gaskets.

In a small engine, a gasket must be light in weight and manufactured at a low cost. However, a conventional steel laminate gasket is heavy and expensive. Therefore, a conventional steel laminate gasket is not usually used for a small size engine.

On the other hand, when engine parts to which a gasket is attached, such as a cylinder head and a cylinder block, are manufactured, small projections, dents or scratches are formed on gasket attaching portions by cutter trace.

In order to securely seal between the engine parts by a gasket, it is necessary to fill the dents or scratches. Otherwise, fluid may leak through the dents or scratches especially when high pressure is applied to the gasket.

Conventionally, a coating is formed on an outer surface of the gasket in order to fill the dents or scratches. In case a soft coating, such as gum or synthetic resin, is applied on the gasket, the coating must be thin. Generally, the soft coating can be applied onto the gasket to fill the dents or scratches under 8-10 micrometers on the engine parts.

In case the dents or scratches are large or deep more than 8-10 micrometers, if a large amount of soft coating is applied onto the gasket, the soft coating causes flow in use, which reduces surface pressure on the gasket to cause leakage. Therefore, a large amount of a soft coating can not be applied onto the gasket.

US-A-4834399 describes a metal laminate gasket of the type described above wherein a soft coating of a rubber or resin is applied to both surfaces of a plate of the gasket.

In case the dents or scratches are deep more than 8-10 micrometers, therefore, the surface of the engine part are ground additionally for reducing the dents or scratches under 8-10 micrometers.

In USP 3,841,289, graphite sheets are laminated on a metal plate, wherein when a gasket is tightened, the graphite sheets are compressed further to withstand variable cylinder pressure and temperature.

However, even if the graphite sheets are compressed at maximum density, if high heat and pressure are applied in use, the graphite sheets may partly flow to reduce surface pressure thereat.

EP-A-O 328 675 describes a coating for a gasket the coating comprising a mixture of from 20 to 60 wt% of a low density expanded graphite with from 40 to 80 wt% of a resin binder. The graphite constituent has a specific volume of from 10 to 300 cc/g.

Accordingly, one object of the present invention is to provide a steel laminate gasket, which is light in weight and simple in structure.

Another object of the invention is to provide a steel laminate gasket as stated above, which includes a material for filling dents or scratches on engine parts without causing flow in use.

A further object of the invention is to provide a steel laminate gasket as stated above, which can seal properly in compliance with vibration of an engine.

Further objects and advantages of the invention will be apparent from the following description of the invention.

### Summary of the Invention

A metal laminate gasket of the invention is designed to be installed in an internal combustion engine having at least one hole therein. The gasket comprises a first metal plate including a base section, a flange situated under the base section around the first hole, and a curved portion situated between the flange and the base section to define the first hole,
a second metal plate placed under the base section of the first plate and having a second opening, and
a thin graphite layer attached to the second plate at an opposite side relative to the first plate,
said metal gasket being characterised in that the thickness of the second plate is less than that of the first plate, and the thickness of the second plate with the graphite layer is greater than the thickness of the first plate so that when the gasket is tightened, the flange and the base section are compressed to securely seal around the hole of the engine and the graphite layer is compressed on the second plate while providing surface pressure thereat.

The graphite layer has a thickness between 30 and 100 microns. When the gasket is tightened, the graphite layer fills dents or scratches on an engine part to which the graphite layer abuts or contacts. As a result, the gasket is closely fit to the engine part to improve sealing ability and can slide relative to the engine part.

The second plate may include a bead around the second hole. Also, the thickness of the second plate at the bead or the height of the bead is greater than the thickness of the first plate. Accordingly, when the gasket is tightened, the bead is compressed to seal around the hole of the engine.

The gasket may be further provided with a graphite layer between the first and second plates. In this case, the second plate must be thinner than the first plate and have resiliency. As a result, the bead on the second plate can slide relative to the engine part and the first plate. Namely, the bead resiliently deforms in compliance with vibration of the engine to secure seal around the hole of the engine.

### Brief Description of the Drawings

Fig. 1 is a plan view of a part of a first embodiment of a gasket of the invention;
Fig. 2 is an enlarged section view taken along line 2-2 in Fig. 1;
Fig. 3 is a section view, similar to Fig. 2, of a second embodiment of the invention; and
Fig. 4 is a section view, similar to Fig. 2, of a third embodiment of the invention.

### Detailed Description of Preferred Embodiment

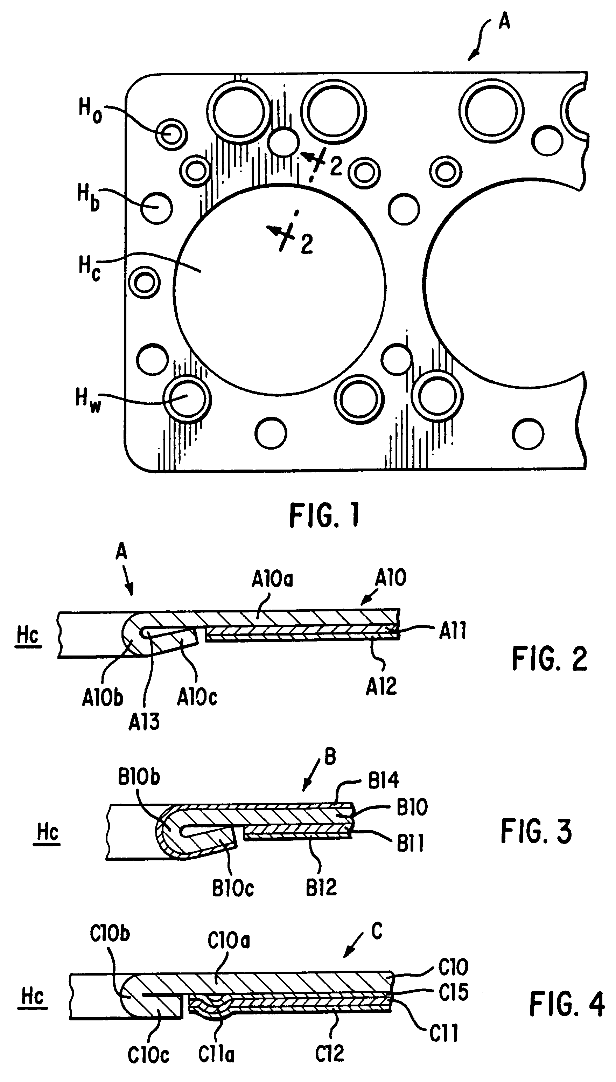

Referring to Figs. 1 and 2, a first embodiment A of a gasket of the invention is shown. The gasket A is a cylinder head gasket, and includes a cylinder bores Hc, water holes Hw, oil holes Ho and bolt holes Hb, as in the conventional gasket.

The sealing mechanism of the invention is applied around the cylinder bore Hc, but the same sealing mechanisms may be formed around other holes, or for other gaskets.

As shown in Fig. 2, the gasket A comprises an upper plate A10, and a lower plate A11 situated under the upper plate A10. A thin graphite sheet A12 is attached or glued under the lower plate A11.

The upper plate A10 includes a base section A10a extending substantially the entire area of the gasket A, a curved portion A10b to define the cylinder bore Hc, and a flange A10c. A space A13 is formed between the base section A10a and the flange A10c adjacent the curved portion A10b.

The lower plate A11situated under the upper plate A10 extends substantially the entire area of the gasket A. The thickness of the lower plate A11 is thinner than the thickness of the upper plate A10. The lower plate A11 operates as a surface pressure regulation plate for the curved portion A10b and the flange A10c.

The graphite sheet A12 is flexible, and has density of 0.8 1.8g/cm³ and thickness of 0.07mm. The graphite sheet A12 is used to fill small scratches of a cylinder block (not shown). Also, the graphite sheet helps sealing between the gasket and the cylinder block and allows the gasket to slide relative to the cylinder block.

It is important that the graphite sheet must have a thickness between 30 and 100 microns. If the thickness is under 30 microns, the qraphite sheet may not sufficiently fill small scratches of the cylinder block. If the thickness is over 100 microns, the graphite sheet may flow when high pressure and temperature are applied thereto, so that leakage may occur.

In the present invention, since the graphite sheet A12 is attached to the lower plate A11, the graphite sheet A12 is not directly exposed to the cylinder bore Hc. Namely, the graphite sheet A12 is not exposed to high temperature and pressure, so that the graphite sheet A12 does not flow in use.

In the present invention, when the gasket A is compressed between a cylinder head and a cylinder block (both not shown), the graphite sheet A12 attached to the lower plate A11 is strongly pushed against the cylinder block. Since the cylinder block has small scratches on the outer surface thereof due to cutter trace, the graphite sheet A12 fills the small scratches to form a smooth surface.

Accordingly, the gasket A can smoothly slide relative to the cylinder block when stress is formed therebetween according to expansion and contraction of the gasket and the cylinder block due to heat. Further, the graphite sheet A12 seals effectively relative to the cylinder block.

When the gasket A is tightened, the curved portion A10b is compressed so that the space A13 is flattened. Accordingly, the curved portion A10b provides a resilient surface pressure for sealing around the cylinder hole. Also, since the thickness of the flange is thicker than the lower plate A11, a large surface pressure is formed at the flange A10c, so that the area around the cylinder bore Hc is securely sealed at the flange A10c.

Fig. 3 shows a second embodiment B of a metal gasket of the invention. The gasket B comprises an upper plate B10 with a curved portion B10b and a flange B10c, a lower plate B11, and a graphite sheet B12, as in the gasket A.

In the gasket B, however, a metal plating B14, which is known in the art, is formed on an outer surface of the upper plate B10. Since the metal plating B14 is strong against heat, the metal plating B14 is entirely formed at the upper plate B10 contacting the cylinder head and exposing the cylinder bore Hc. Although the metal plating B14 can not completely fill small scratches on the cylinder head, the metal plating B14 helps sealing between the gasket and the cylinder head.

Fig. 4 shows a third embodiment C of a steel laminate gasket of the invention. The gasket C comprises an upper plate C10 having a base section C10a, a curved portion C10b and a flange C10c, a lower plate C11, and a graphite sheet C12, as in the gasket A.

However, in the gasket C, the lower plate C11 is provided with a bead C11a around the cylinder bore Hc, and a graphite sheet C15 is situated between the upper plate C10 and the lower plate C11. Also, the gasket C does not have a space adjacent the curved portion C10b, like a space A13 in the gasket A. The flange C10c and a part of the base section C10a form a solid portion around the cylinder bore Hc.

The lower plate C11 is thinner than the upper plate C10, but the height of the bead Clla is made higher than the thickness of the flange C10c. Therefore, when the gasket C is assembled, the bead C11a projects outwardly from a lower surface of the flange C10c.

When the gasket C is tightened, the solid portion around the cylinder bore Hc, i.e. the flange C10c and a part of the base portion C10a of the upper plate C10, is compressed. However, since the solid portion is relatively wide, even if high tightening force is applied to the solid portion, the tightening force is not concentrated at one portion, so that relatively large tightening force can be applied to seal around the cylinder bore Hc.

Also, when the gasket is tightened, the bead C11a is compressed to seal around the cylinder bore Hc outside the solid portion. As a result, the area around the cylinder bore Hc is securely and resiliently sealed.

Further, when the gasket is tightened, the graphite sheet C12 fills small scratches in the cylinder block. The graphite sheet C15 operates to help sliding between the upper and lower plates C10, C11as well as sealing therebetween. Especially, the bead Clla is not completely compressed when the gasket C is tightened, because the flange C10c operates as a surface pressure regulation plate. Therefore, when the gasket vibrates, the bead can slide and vibrate according to the vibration of the engine to provide good sealing around the cylinder bore Hc.

In the present invention, the gasket is formed of two metal plates to provide a thin gasket. Nevertheless, the gasket can securely seal around the hole of the engine together with the thin graphite sheet. Moreover, even if a gasket attaching portion of the engine part is not smoothly formed, the gasket can fill small scratches and provide good sealing between the engine part and the gasket.

While the invention has been explained with reference to the specific embodiments of the invention, the explanation is illustrative and the invention is limited only by the appended claims.

## Claims

1. A metal laminate gasket (A-C) for an internal combustion engine having at least one hole therein comprising:
a first metal plate (A10-C10) including a base section (A10a-C10a), a flange (A10c-C10c) situated under the base section around the first hole (Hc), and a curved portion (A10b-C10b) situated between the flange and base section to define the first hole,
a second metal plate (A11-C11) placed under the base section (A10a-C10a) of the first plate and having a second opening, and
a thin graphite layer (A12-C12) attached to the second plate at an opposite side relative to the first plate,
said metal gasket being characterized in that the thickness of the second plate (A11-C11) is less than that of the first plate (A10-C10), and the thickness of the second plate (A11-C11) with the graphite layer (A12-C12) is greater than the thickness of the first plate (A10-C10) so that when the gasket is tightened, the flange and the base section are compressed to securely seal around the hole of the engine and the graphite layer is compressed on the second plate while providing surface pressure thereat.

2. A metal laminate gasket according to claim 1, wherein the graphite layer (A12-C12) has a thickness between 30 and 100 microns.

3. A metal laminate gasket according to either claim I or claim 2, wherein said second plate (C11) further includes a bead (C11a) around the second hole, the thickness of the second plate at the bead being greater than the thickness of the first plate (C10) so that when the gasket is tightened, the bead is compressed to seal around the hole of the engine.

4. A metal laminate gasket according to claim 3, further comprising a graphite layer (C15) between the first and second plates, said second plate being thinner than the first plate and having resiliency, said bead (C11a) being slidable relative to the engine part and the first plate due to the graphite layer so that the bead resiliently deforms in compliance with vibration of the engine to securely seal around the hole.

5. A metal laminate gasket according to any one preceding claim from 1 to 3, further comprising a graphite layer (C15) between the first and second plates to seal therebetween.

6. A metal laminate gasket according to claim 1, wherein said curved portion (A10b; B10b) has resiliency to tightly seal around the first hole when the gasket is tightened.

7. A metal laminate gasket according to any one preceding claim wherein the density of said graphite layer lies in the range from 0.8 to 1.8 g/cm³.

## Patentansprüche

1. Metallaminatdichtung (A-C) für eine Brennkraftmaschine, die wenigstens ein Loch darin hat, umfassend:
eine erste Metallplatte (A10-C10), die einen Basisabschnitt (A10a-C10a), einen Flansch (A10c-C10c), der sich unter dem Basisabschnitt um das erste Loch (Hc) befindet, und einen gekrümmten Teil (A10b-C10b), der sich zwischen dem Flansch und einem Basisabschnitt zum Begrenzen des ersten Lochs befindet, umfaßt,
eine zweite Metallplatte (A11-C11), die unter dem Basisabschnitt (A10a-C10a) der ersten Platte plaziert ist und eine zweite Öffnung hat, und
eine dünne Graphitschicht (A12-C12), die auf einer relativ zu der ersten Platte entgegengesetzten Seite an der zweiten Platte angebracht ist,
wobei die Metalldichtung dadurch gekennzeichnet ist, daß die Dicke der zweiten Platte (A11-C11) geringer als jene der ersten Platte (A10-C10) ist, und die Dicke der zweiten Platte (A11-C11) mit der Graphitschicht (A12-C12) größer als die Dicke der ersten Platte (A10-C10) ist, so daß, wenn die Dichtung festgezogen wird, der Flansch und der Basisabschnitt zusammengedrückt werden, um sicher um das Loch des Motors abzudichten, und die Graphitschicht auf der zweiten Platte zusammengedrückt wird, während sie dort Oberflächendruck vorsieht bzw. dort Oberflächendruck vorgesehen wird.

2. Metallaminatdichtung gemäß Anspruch 1, worin die Graphitschicht (A12-C12) eine Dicke zwischen 30 und 100 Mikron hat.

3. Metallaminatdichtung gemäß entweder Anspruch 1 oder Anspruch 2, worin die zweite Platte (Cll) weiter eine Wulst (C11a) um das zweite Loch umfaßt, wobei die Dicke der zweiten Platte an der Wulst größer als die Dicke der ersten Platte (C10) ist, so daß, wenn die Dichtung festgezogen wird, die Wulst zusammengedrückt wird, um um das Loch des Motors abzudichten.

4. Metallaminatdichtung gemäß Anspruch 3, weiter umfassend eine Graphitschicht (C15) zwischen der ersten und zweiten Platte, wobei die zweite Platte dünner als die erste Platte ist und Elastizität bzw. Rückstellkraft hat, wobei die Wulst (C11a) relativ zu dem Motorteil und der ersten Platte aufgrund der Graphitschicht verschiebbar ist, so daß sich die Wulst elastisch in Federung bzw. Nachgiebigkeit bei bzw. gegen Vibration des Motors deformiert, um sicher um das Loch abzudichten.

5. Metallaminatdichtung gemäß irgendeinem vorhergehenden Anspruch von 1 bis 3, weiter umfassend eine Graphitschicht (C15) zwischen der ersten und zweiten Platte, um dazwischen abzudichten.

6. Metallaminatdichtung gemäß Anspruch 1, worin der gekrümmte Teil (A10b; B10b) Elastizität bzw. Rückstellkraft hat, um dicht bzw. fest bzw. straff um das erste Loch abzudichten, wenn die Dichtung festgezogen wird.

7. Metallaminatdichtung gemäß irgendeinem vorhergehenden Anspruch, worin die Dichte der Graphitschicht in dem Bereich von 0,8 bis 1,8 g/cm³ liegt.

## Revendications

1. Joint d'étanchéité en métal laminé (A-C) pour un moteur à combustion interne comportant au moins un trou comprenant :
une première plaque métallique (A10-C10) comportant une section de base (A10a-C10a), une bride (A10c-C10c) située sous la section de base autour d'un premier trou (Hc), et une partie courbe (A10b-C10b) située entre la bride et la section de base pour définir le premier trou,
une seconde plaque métallique (A11-C11) placée sous la section de base (A10a-C10a) de la première plaque et ayant une deuxième ouverture, et
une mince couche de graphite (A12-C12) fixée à la seconde plaque sur un côté opposé par rapport à la première plaque,
ledit joint d'étanchéité en métal étant caractérisé en ce que l'épaisseur de la seconde plaque (Al1-C11) est inférieure à celle de la première plaque (A10-C10), et l'épaisseur de la seconde plaque (A11-C11) comportant la couche de graphite (A12-C12) est supérieure à l'épaisseur de la première plaque (A10-C10) de sorte que lorsque le joint d'étanchéité est serré, la bride et la section de base sont comprimées pour rendre étanche de façon sûre le contour du trou du moteur et la couche de graphite est comprimée sur la seconde plaque tout en lui fournissant une pression superficielle.

2. Joint d'étanchéité en métal laminé selon la revendication 1, dans lequel la couche de graphite (A12-C12) a une épaisseur comprise entre 30 et 100 microns.

3. Joint d'étanchéité en métal laminé selon la revendication ou la revendication 2, dans lequel ladite seconde plaque (C11) comporte en outre une nervure (C11a) autour du deuxième trou, l'épaisseur de la seconde plaque au niveau de la nervure étant supérieure à l'épaisseur de la première plaque (C10) de sorte que lorsque le joint d'étanchéité est serré, la nervure est comprimée pour rendre étanche le contour du trou du moteur.

4. Joint d'étanchéité en métal laminé selon la revendication 3, comprenant en outre une couche de graphite (C15) entre les première et seconde plaques, ladite seconde plaque étant plus mince que la première plaque et ayant une caractéristique d'élasticité, ladite nervure (C11a) coulissant par rapport à la partie du moteur et à la première plaque en raison de la couche de graphite de sorte que la nervure se déforme de façon élastique conformément à la vibration du moteur pour rendre étanche de façon sûre le contour du trou.

5. Joint d'étanchéité en métal laminé selon l'une quelconque des revendications 1 à 3, comprenant en outre une couche de graphite (C15) entre les première et seconde plaques pour assurer l'étanchéité entre les deux.

6. Joint d'étanchéité en métal laminé selon la revendication 1, dans lequel ladite partie courbe (A10b ; B10b) a une caractéristique élastique pour rendre étanche le contour du premier trou lorsque le joint d'étanchéité est serré.

7. Joint d'étanchéité en métal laminé selon l'une quelconque des revendications précédentes, dans lequel la densité de ladite couche de graphite se situe dans la plage de 0,8 à 1,8 g/cm.
